Europäisches Patentamt

European Patent Office

Office européen des brevets

(11) Publication number: **0 193 990**
**A2**

(12) # EUROPEAN PATENT APPLICATION

(21) Application number: **86200286.2**

(22) Date of filing: **25.02.86**

(51) Int. Cl.⁴: **A 21 C 9/06**

(30) Priority: **08.03.85 IT 4682085**

(43) Date of publication of application: **10.09.86**
**Bulletin 86/37**

(84) Designated Contracting States: **AT BE CH DE FR GB IT LI LU NL SE**

(71) Applicant: **LABORATORI RIUNITI S.p.A., 31, Via Bistolfi, I-20134 Milano (IT)**

(72) Inventor: **Ricci, Enzo, Via Fratelli Cervi Residenza del Seminario, I-20090 Milano 2 - Segrate (IT)**

(74) Representative: **Corradini, Corrado, STUDIO SECCHI & CORRADINI 4, Via Dante Alighieri, I-42100 Reggio Emilia (IT)**

(54) **Machine for filling pastry products in general, such as croissants before baking.**

(57) A machine for filling unbaked horns and the like, comprising a horizontal conveyor (2, 3) driven with stepwise motion and provided with a plurality of open-bottomed cups (5) into which the unbaked horns (6) are inserted in an upright position, downstream of said conveyor (2, 3) there being disposed a group of vertical needles driven with vertical rectilinear to-and-fro motion and arranged to inject the filling material into the underlying upright horns (6) while they are kept temporarily stationary.

- 1 -

MACHINE FOR FILLING PASTRY PRODUCTS IN GENERAL, SUCH AS
CROISSANTS, BEFORE BAKING

This invention relates to a high-productivity machine for filling
pastry products such as croissants, brioches, horns etc. with for
example jam, cream, etc., before baking.

Such pastry products are currently filled before being baked, by
inserting a hollow needle transversely into them and injecting a
small quantity of the stated cream, jam etc. into their centre.

In the said known filling system, the filling material is
introduced only into the central part of the pastry product, said
central part being wider than the others and thus most suitable
for filling.

In this respect, it should be noted that the pastry product would
be more tasty and enjoyable if the same quantity of cream or jam
were homogeneously distributed along the longitudinal zone of
said pastry product, but this is not possible by the known
method.

The main object of the present invention is to provide and
protect a machine which is able to fill said pastry products
before baking, which is of high productivity, and which is able
to deposit the filling along a consistent longitudinal portion of
said pastry products, within the framework of a simple and
rational construction.

This object is attained according to the invention by providing a horizontal conveyor comprising equidistant pairs of transverse elements which are fitted with two facing series of equidistant half-shells arranged to form a corresponding number of open-based cups for temporarily receiving said pastry products in an upright position.

More particularly, each cup formed from two half-shells comprises a cavity able to receive one end of the horn, the central wider part of which rests on the mouth of said cup so as to keep the horn vertical.

Moreover, according to the invention the conveyor is driven with stepwise motion so that consecutive portions thereof are sequentially brought under an injection station comprising a plurality of vertical needles, these latter being distributed in the same manner as the cups, and being arranged to descend, with the conveyor stationary, to penetrate longitudinally into the horns and then withdraw from with them with simultaneous delivery of the filling material.

Said filling operation terminates before the needles are completely withdrawn from the horns, and feeler switch means are provided at the entry to the injection station to halt the conveyor should even one horn be transversely inclined.

In addition, blowing means are provided downstream of the conveyor to facilitate discharge of the filled pastry products, said means being disposed along a curved portion of the conveyor so as to act on the rear of the filled products when the half-shells of the cups are in a diverged state, a removal conveyor then receiving the thus discharged filled products.

The characteristics and constructional merits of the invention will be more apparent from the detailed description of one preferred embodiment thereof, given hereinafter by way of example.

Figure 1 is an overall side view of the invention

Figure 2 is a side view, to an enlarged scale, of that portion of the conveyor lying above the injection station.

Figure 3 is a section on the line III-III of Figure 2.

Said figures show a horizontally extending base frame 1, on which there is disposed a slat conveyor passing endlessly about two opposing pairs of sprocket wheels 2 of horizontal axis.

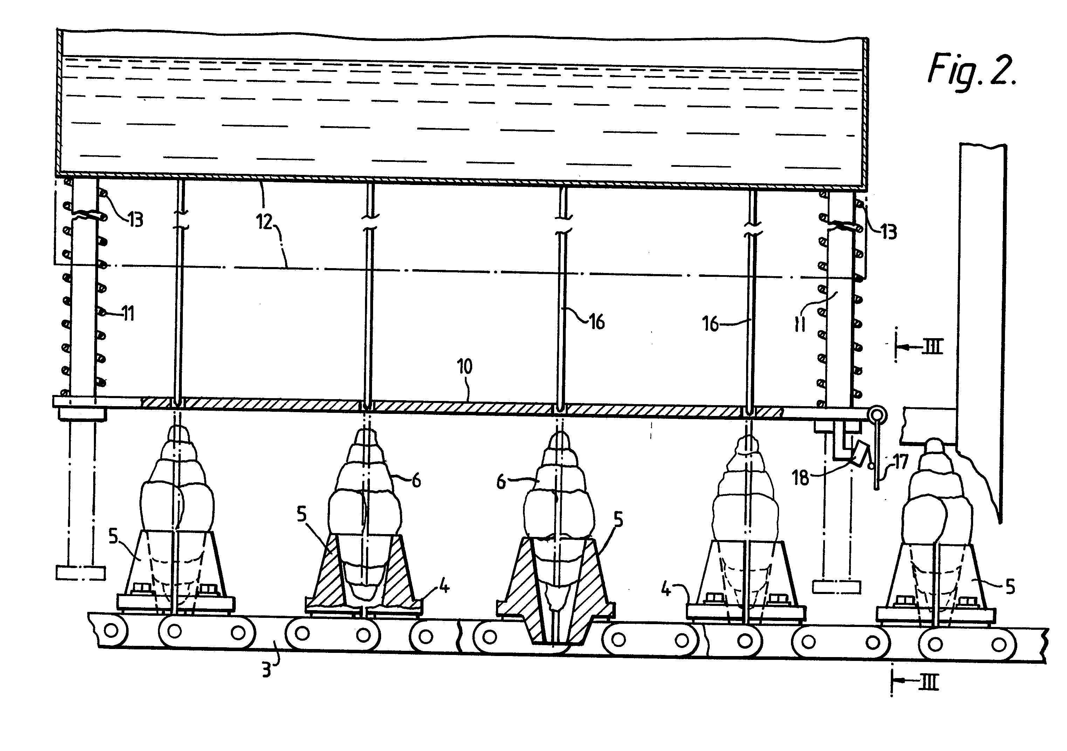

As can be better seen from Figure 2, said horizontal conveyor comprises two chains 3, the links of which are connected together by equidistant pairs of adjacent transverse bars 4.

In Figure 2 it can be seen that one pair of bars 4 is provided for every three chain links 3, but this must in no way be considered limitative.

In addition, centrally provided on each pair of bars 4 there is a series of equidistant cups 5, which are divided into two halves associated with the respective bars 4, and extend below these latter where they remain open-ended.

The cups 5 are shaped in such a manner as to be able to retain in an erect position the unbaked pastry products to be filled, these latter being shown as horns 6.

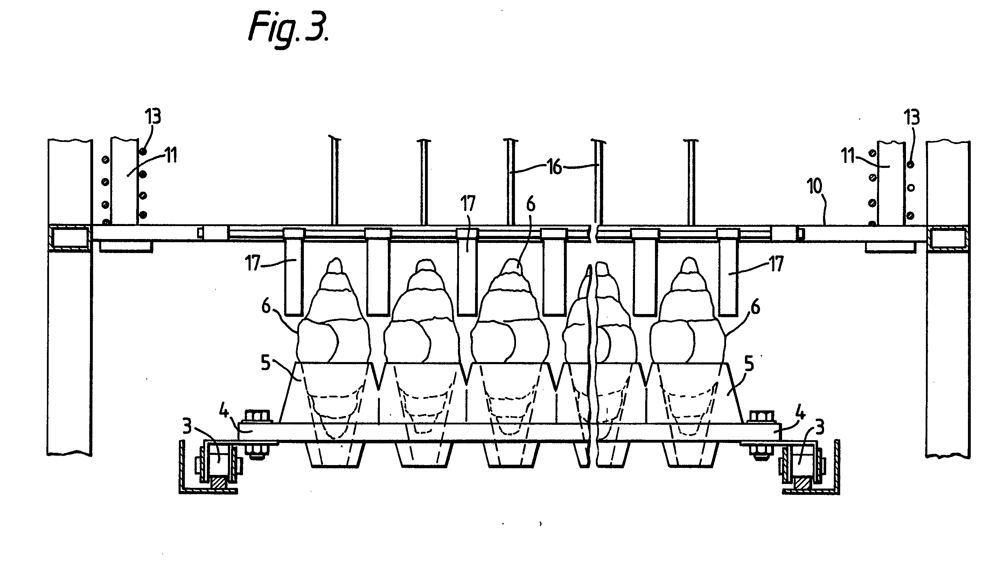

For this purpose, the cups 5 comprise a cavity which is flared towards its mouth so as to be able to receive the tapered end part of the horn 6, said mouth acting as a support for the central wider part of said horn 6 (Figures 2 and 3).

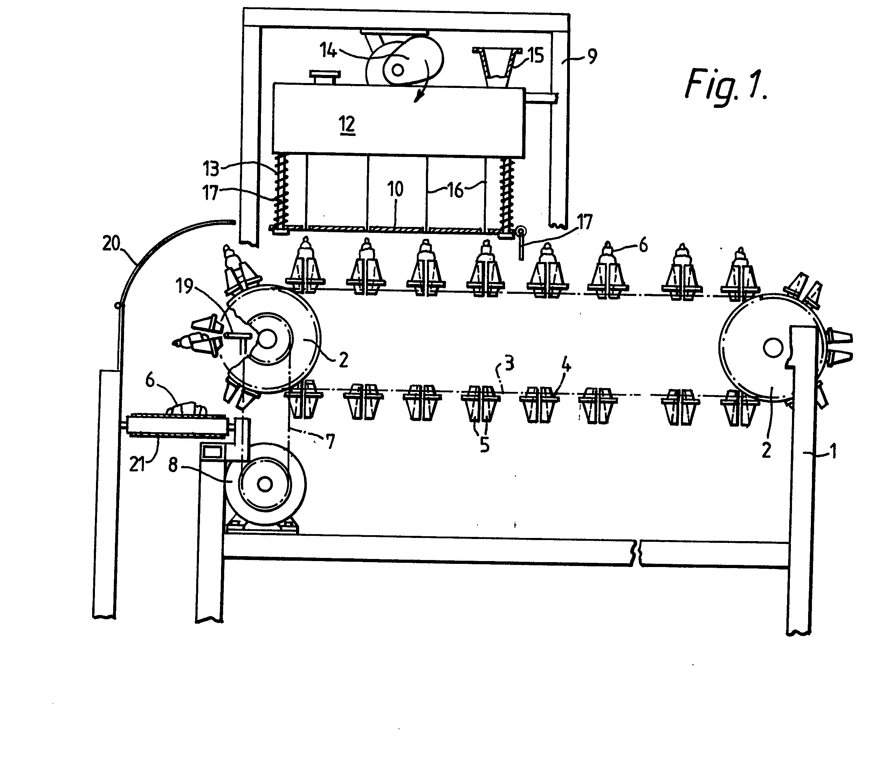

As clearly shown in Figure 3, the upper straight portion of the conveyor 3, 4 is supported by suitable lateral guides, and its upstream end (Figure 1) constitutes the zone in which discharge takes place, this being effected manually.

Said conveyor 3, 4 is driven with stepwise motion by way of a chain transmission 7 driven by a geared motor unit 8 (see Figure 1).

Above the downstream end part of the upper straight portion of the conveyor 3, 4, there is a framework 9 provided lowerly with a horizontal fixed plate 10 on which a series of vertical guide bars 11 is slidably mounted, these being fixed to an overlying container 12.

Respective springs 13 are moounted about the vertical bars 11 to raise the container 12, the downward movement of which is controlled by a cam device 14 (Figure 1).

The container 12 also comprises an upper mouth 15 for loading the filling material, for example cream, jam etc., and the said container 12 is connected in known manner to a convenient source of compressed air (not shown).

In addition, four transverse series of vertical hollow needles 16 branch from the base of the container 12 and are guided in respective bores in the horizontal plate 10, these being distributed in the same manner as the cups 5.

In the illustrated embodiment, twelve cups 5 are provided for each pair of bars 4, so that fortyeight horns 6 are filled during each injection stage.

It should be noted that the aforesaid in no way limits the scope of the invention.

When the conveyor 3, 4 has undergone a forward movement corresponding to a length comprising four pairs of bars 4, it stops, and the cam 14 receives the enabling command for lowering the container 12, so that the needles 16 also descend to penetrate longitudinally into the horns 6 until they reach the lower ends thereof as shown in Figure 2 by dashed and dotted lines.

- 5 -                              0193990

When the needles 16 begin to rise, the container 12 is put under pressure, and the filling material is injected into the pastry products 6.

The delivery ceases before the needles 16 withdraw from the horns, the cam 14 stopping when it has undergone one complete revolution, after which the conveyor undergoes a further forward movement step.

To prevent the horns 6 being filled in an irregular manner, a transverse comb of thin vertical strips 17 is hinged to the entry edge of the plate 10, this comb comprising, for each longitudinal line of cups 5, two strips symmetrically disposed about this latter in the immediate vicinity of the mouths of the cups 5 (see Figure 3).

Even if only one horn 6 of a transverse row is excessively inclined to the vertical axis of its cup 5, it strikes the comb 17 which, swinging rearwards, contacts a feeler switch 18 (Figure 2) which halts the geared motor unit 8.

The operation of the machine is restored by merely straightening said inclined horn 6.

At the exit of the injection station, the conveyor 3, 4 passes about the downstream sprocket wheels 2 where, as clearly shown in Figure 1, the cups 5 open out to practically free the filled horns 6, which are then discharged with the aid of a rear series of air nozzles 19.

This discharge zone is covered by a protection guard 20, and the filled horns 6 are collected on a transverse removal belt 21 which feeds them to the subsequent operating stations.

The merits and advantages of the invention are clearly apparent from the aforegoing description and from a simple examination of the accompanying figures.

0193990

The invention is not limited to the single embodiment illustrated and described, but comprises all technical equivalents of the aforesaid means and their combinations, provided they are implemented in accordance with the following claims.

PATENT CLAIMS

1.      A machine for filling unbaked pastry products such as horns, characterised by comprising a horizontal slat conveyor (3, 4) driven with stepwise motion, and provided with a plurality of open-bottomed cups (5) which are fixed to the conveyor (3, 4) in equidistant transverse rows and into which the unbaked horns (6) to be filled are inserted in an upright position, each cup (5) comprising two facing, identical half-shells fixed to two underlying adjacent bars (4) which form the slat of the conveyor, above the downstream end of the upper straight portion of said conveyor (2, 3) there being positioned a vertically mobile injection head provided lowerly with a group of hollow vertical needles (6) for injecting the filling material, to the rear of that downstream portion of said conveyor (2, 3) in which it reverses direction there being provided pneumatic means (19) for discharging the unbaked filled horns (6).

2.      A machine as claimed in claim 1, characterised in that said vertically mobile injection head comprises a container (12) for containing the filling material, said container (12) being connected to a compressed air source and carrying said vertical needles fixed to its base and guided by an underlying fixed horizontal plate (10) which also acts as a guide for said container (12).

3.      A machine as claimed in claim 1, characterised in that said pneumatic discharge means comprise a series of air nozzles (19) situated to the rear of the conveyor (2, 3) in positions corresponding with the longitudinal lines of cups (5).

4.      A machine as claimed in claim 1, characterised in that a belt (21) for collecting/removing the unbaked filled horns (6) is disposed below and external to the downstream curved portion of said conveyor (2, 3).

5.      A machine as claimed in claim 1, characterised in that immediately upstream of said injection head (12, 16), there is transversely hinged a comb comprising, for each longitudinal line of cups (5), two vertical thin strips (17) which are symmetrically disposed about said line, there being associated with said comb (17) a rear feeler switch (18) arranged to halt the drive (8) of said conveyor (2, 3).

Fig. 1.

*Fig. 2.*

0193990

Fig.3.